# EUROPÄISCHE PATENTSCHRIFT

(11) **EP 2 326 161 B1**
(45) Veröffentlichungstag und Bekanntmachung des Hinweises auf die Patenterteilung: **08.04.2015**
(21) Anmeldenummer: 09778553.9
(22) Anmeldetag: 16.09.2009
(51) Int. Cl.: A01G 3/053

(54) **AKKU-GARTENSCHERE**
BATTERY POWERED GARDENING SHEARS
CISAILLES DE JARDIN À BATTERIE

(30) Priorität: 19.09.2008 DE 102008047999
(43) Veröffentlichungstag der Anmeldung: 01.06.2011
(73) Patentinhaber: MTD Products Inc, Valley City OH 44280 (US)
(72) Erfinder: MOOG, Christopher, 56422 Wirges (DE)
(74) Vertreter: Feldkamp, Rainer
(86) Internationale Anmeldenummer: PCT/EP2009/006693
(87) Internationale Veröffentlichungsnummer: WO 2010/031542

(56) Entgegenhaltungen:
- EP-A1- 1 479 284
- EP-A1- 1 859 910
- EP-A2- 0 974 434
- DE-A1- 2 503 512
- GB-A- 1 221 130

## Beschreibung

Die Erfindung bezieht sich auf eine Akku-Gartenschere, bei der das bewegliche Messer einer aus einem festen Messer und einen beweglichen Gegenmesser bestehenden Scherenmessereinheit durch einen Elektromotor über ein Getriebe an angetrieben wird, welches die rotierende Bewegung in eine Messerschneidbewegung umsetzt. Derartige Gartenscheren sind insbesondere als Rasenscheren in vielen Ausführungsformen bekannt geworden. Der den Elektromotor speisende Akku wird bei Bedarf über eine Steckverbindung mit einem Ladegerät verbunden. Die Scherenmessereinheit ist bei den bekannten Scheren in das Scherengehäuse fest eingebaut, und es bestehen daher Schwierigkeiten, die fest im Gehäuse verankerten Messer zu reinigen oder zu schmieren. Eine Entnahme der Meser konnte bisher nur durchgeführt werden, indem das Gehäuse demontiert und der mittels Schrauben oder einer Verrastung befestigte Deckel abgenommen wird. Diese Demontage, die für den Zugriff zu den Messereinheiten notwendig ist, erforderte einen hohen Zeit- und Arbeitsaufwand und konnte vom Laien im Allgemeinen nicht durchgeführt werden.

Aus der EP 1 479 284 A1 ist eine elektromotorisch betriebene Grasschere bekannt, bei der das Auswechseln einer Scherenmessereinheit durch Entnahme der Messereinheit nach unten ermöglicht wird. Auch hierbei kann die Auswechslung der Messereinheit nur erfolgen, nachdem eine den unteren Gehäuseteil im Betriebszustand abschließende Klappe verschoben und dann ihr Gelenk nach unten ausgeschwenkt wird.

Der Erfindung liegt die Aufgabe zugrunde, eine Akku-Gartenschere der im Oberbegriff des Anspruchs 1 genannten Art derart auszubilden, dass die die Scherenmesser bildende Scherenmessereinheit einfach und ohne Demontage des Gehäuses entfernt und ausgewechselt werden kann.

Diese Aufgabe wird durch die im kennzeichnenden Teil des Anspruchs 1 angegebenen Merkmale gelöst.

Das manuell zu betätigende Stellglied kann gemäß einer Ausführungsform durch einen am Gehäuse gelagerten Handhebel gebildet sein, der mit einem Bewegungsnocken verbunden ist, welcher an der Antriebseinheit angreift und bei seiner Verschwenkung die Antriebseinheit unter Aufhebung der Fixierung gegen die Federkraft anhebt und außer Eingriff mit den Messern bringt, so dass diese entlang einer Führung vorzugsweise innerhalb der Messerebene verschiebbar und aus einer Gehäuseöffnung entnehmbar bzw. auswechselbar sind. Das manuell betätigbare Stellglied kann z.B. auch als Keilschubgetriebe oder als Drehwelle oder als Druckknopf ausgebildet sein, wobei im angehobenen Zustand eine Arretierung vorgesehen ist, damit die Messereinheit mühelos ausgetauscht werden kann. Dadurch wird es möglich, ein und dieselbe Gartenschere für mehrere Zwecke zu verwenden, indem einfach nur die Messereinheit ausgewechselt wird, was kurzzeitig auch von einem Laien durchgeführt werden kann. So ist es möglich, die Messereinheit, die zum Schneiden von Rasen, insbesondere Rasenkanten, geeignet ist, durch eine Messereinheit zu ersetzen, die in ihrer Formgebung besonders zum Schneiden von Konturen geeignet ist. Ferner sieht die Erfindung vor, Scherenmessereinheiten zur Verfügung zu stellen, mit denen Sträucher, d.h. auch dünne Äste, geschnitten werden können, wobei die Scherenmessereinheit entsprechend den üblichen Heckenscheren mit mehreren nach zwei Seiten weisenden Doppelmessern ausgebildet ist.

Ausgestaltungen der Erfindung ergeben sich aus den Unteransprüchen und der folgenden Beschreibung von Ausführungsbeispielen.

Nachstehend werden Ausführungsbeispiele anhand der Zeichnung beschrieben. In der Zeichnung zeigen:

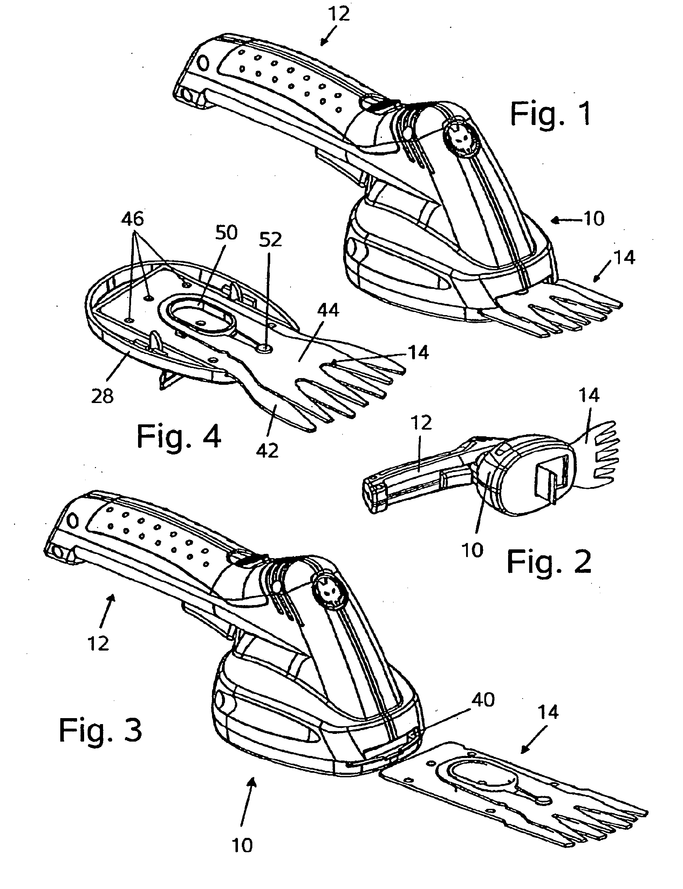

Figur 1 ist eine perspektivische Ansicht einer Akku-Gartenschere gemäß der Erfindung;
Figur 2 ist eine perspektivische Ansicht der Gartenschere nach Figur 1 von unten her betrachtet;
Figur 3 ist eine perspektivische Ansicht einer Akku-Gartenschere und einer aus dieser entnommenen Messereinheit;
Figur 4 ist eine perspektivische Ansicht des vom Gehäuse abgenommenen Bodens mit einer Messereinheit;
Figur 5 ist eine perspektivische Teilansicht einer Akku-Gartenschere mit einer Messereinheit, die als Strauchscherenmesser ausgebildet ist;
Figur 6 ist eine das Gehäuseinnere zeigende aufgeschnittene Gehäuseansicht mit eingesetztem Konturmesser in Betriebsstellung und formschlüssig verriegeltem Zustand;
Figur 7 ist eine aufgebrochene perspektivische Ansicht einer Akku-Gartenschere mit teilweise angehobener Antriebseinheit;
Figur 8 ist eine Schnittansicht der Akku-Gartenschere mit vollständig angehobener entriegelter Antriebseinheit und entnommener Messereinheit.

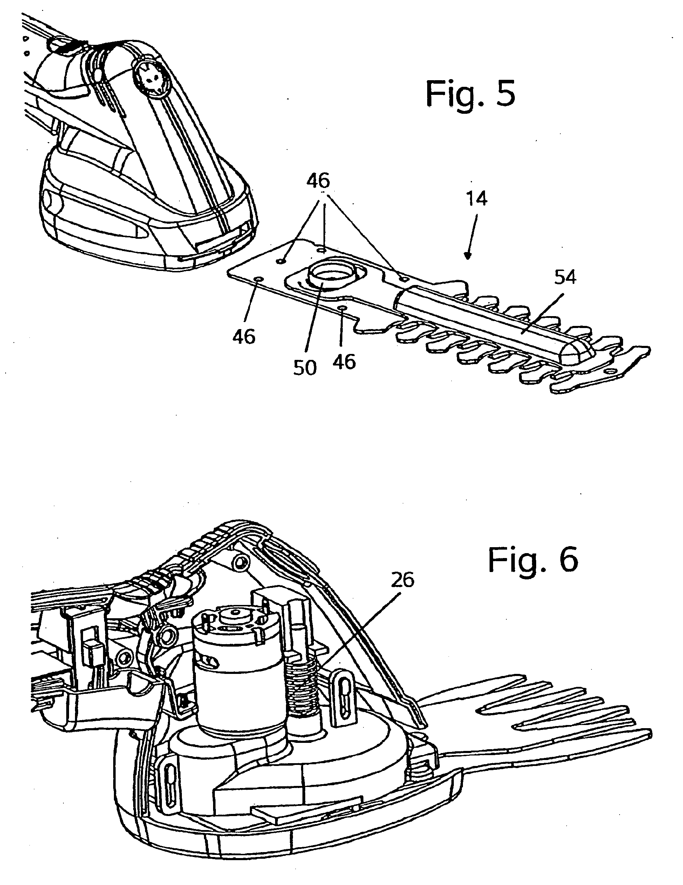

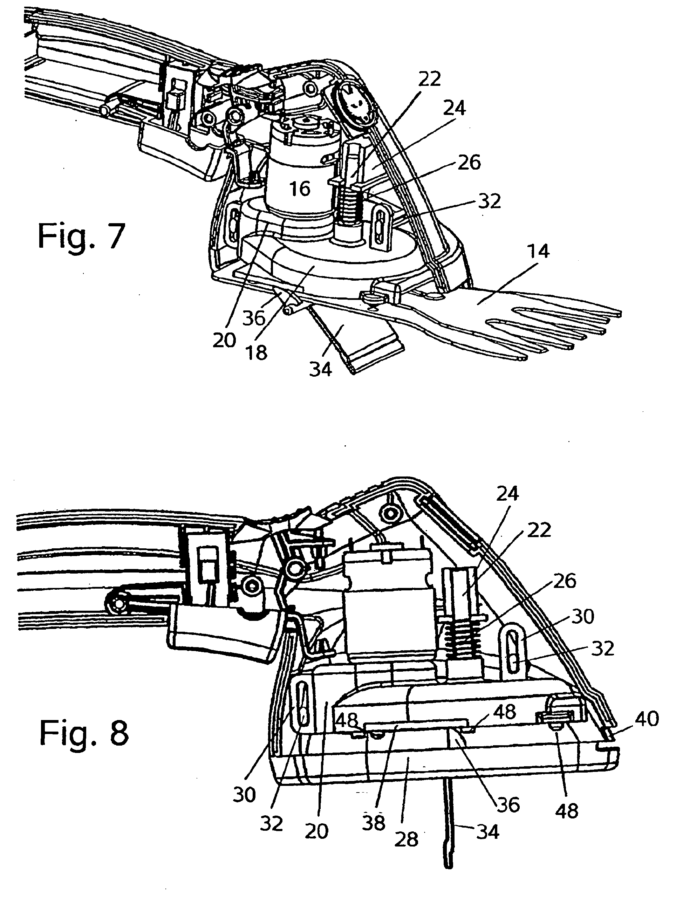

Die Gartenschere besteht aus einem Gehäuse 10, einem damit verbundenen Handgriff 12 und einer im Gehäuse auswechselbar gelagerten Scherenmessereinheit 14. Das Gehäuse umschließt eine aus Elektromotor 16 und Getriebe 18 bestehende Antriebseinheit 20. Diese Antriebseinheit 20 weist eine nach oben vorstehende Führungsstange 22 auf, die in einer gehäusefesten Führungshülse 24 geführt ist. Eine Druckschraubenfeder 26 umschließt die Führungsstange und ist oben durch einen gehäusefesten Anschlag abgestützt und ruht mit ihrem unteren Ende auf der Antriebseinheit 20 und sucht diese, nach unten in Richtung nach dem Boden 28 des Gehäuses zu drücken. Die Antriebseinheit 20 trägt ferner mit Langlöchern versehene Führungen 30, in die mit der Antriebseinheit 20 verbundene Gleitkörper 32 einstehen. Hierdurch wird die Hubbewegung zwischen der Betriebsstellung gemäß Figur 6 und der entriegelten Öffnungsstellung gemäß Figur 8 begrenzt.

Im Boden 28 des Gehäuses ist ein als Abschlussklappe ausgebildeter Hebel 34 um eine Horizontalachse schwenkbar gelagert. Dieser Hebel trägt im Innenteil des Gehäuses einen Nocken 36, der an einer Platte 38 der Antriebseinheit 20 angreift und diese beim Ausschwenken des Hebels 34 in die aus Figur 8 ersichtliche Öffnungsstellung gegen die Schließkraft der Feder 26 anhebt. Die Scherenmessereinheit 14 steht nach außen durch einen Gehäuseschlitz 40 vor und ist aus dem Gehäuse in der aus Figur 8 ersichtlichen Öffnungsstellung in einer Führung verschiebbar und gegen eine andere Messereinheit auswechselbar. Jede Messereinheit besteht aus einem festen Messerblatt 42 und einem gegenüber diesem oszillierend gelagerten beweglichen Messerblatt 44. Das feste Messerblatt 42 weist an vorbestimmten Stellen Passlöcher 46 auf, in die in der Betriebsstellung gemäß Figur 6 Passstifte 48 eingreifen, die an der Unterseite der Antriebseinheit 20 angeordnet sind und die in entriegelter Stellung, d.h. bei eingeschwenktem Stellhebel 34 gemäß Figur 6, in die Passlöcher 46 einstehen und die Scherenmessereinheit 14 unter der Kraft der Feder 26 formschlüssig fixieren.

Das oszillierend gelagerte Messer 44 jeder Scherenmessereinheit 14 weist einen als Langloch ausgebildeten Eingriffsteil 50 auf, in den ein nach unten vorstehendes Abtriebsglied der Antriebseinheit 20 in der Betriebsstellung gemäß Figur 6 eingreift. Das Langloch des Eingriffsteils 50 verläuft bei den Scherenmessereinheiten, die einen Rasenschnitt oder einen Konturschnitt durchführen, in Längsrichtung, damit das bewegliche Messer 44 um seine Vertikalachse 52 schwingen kann. Bei einer als Strauchscherenmesser ausgebildeten Messereinheit gemäß Figur 5 verläuft das Langloch des Eingriffsteils 50 in Messerlängsrichtung, so dass der die Messer tragende und in einer Längsführung 54 laufende Teil in Längsrichtung oszillieren kann.

Der Griff 12 der Schere umschließt den den Elektromotor 16 speisenden Akku, der über einen Ladestecker am freien Ende des Handgriffs 12 aufladbar ist. Die Anordnung ist dabei so getroffen, dass beim Einhängen der Schere in eine Halterung dieser Ladestecker automatisch mit einem Steckerteil der Ladevorrichtung an der Halterung in Eingriff kommt.

Die erfindungsgemäße Gartenschere arbeitet wie folgt:

Im verriegelten Betriebszustand wird die Messereinheit 14 durch Eingriff der Passstifte 48 der Antriebseinheit 20 in die Passlöcher des festen Messerblattes 42 formschlüssig festgelegt, so dass beim Einschalten des Motors die Schere in üblicher Weise arbeiten kann. Dabei wird die Antriebseinheit durch die Druckschraubenfeder 26 sicher in die Arbeitsstellung gedrückt.

Zur Auswechslung der Messereinheiten wird lediglich der die Abschlussklappe am Boden 28 bildende Hebel 34 in die aus Figur 8 ersichtliche Stellung umgelegt, und bei diesem Schwenkvorgang wird über den Nocken 36 die aus Elektromotor 16 und Getriebe 18 bestehende Antriebseinheit 20 angehoben, wobei die Passstifte 48 aus den Passlöchern 46 ausgehoben werden und das Abtriebsglied der Antriebseinheit 20 aus dem Eingriffsteil 50 der Scherenmessereinheit 14 freikommt. In diesem Zustand liegt die Messereinheit frei und kann leicht aus dem vorderen Gehäuseschlitz 40 herausgezogen werden, wobei die Antriebseinheit in der angehobenen Stellung durch den Nocken 36 verbleibt, weil der Hebel 34 in der Öffnungsstellung durch geeignete Mittel gesperrt ist.

Die entnommene und gegebenenfalls gereinigte oder nachgeschliffene Scherenmessereinheit 14 oder eine anders ausgebildete Einheit 14 kann dann in den Gehäuseschlitz 40 eingeschoben werden, wobei seitliche Führungen die Lage der Scherenmessereinheit bestimmen. Beim Zurückschwenken des Hebels 34 in die Schließstellung wird die Antriebseinheit unter der Wirkung der Feder 26 abgesenkt, wobei die Passstifte 48 in die Passlöcher 46 eingreifen und eine Antriebsverbindung zwischen dem Abtriebsglied der Antriebseinheit 20 und dem Eingriffsteil 50 der Scherenmessereinheit hergestellt wird. Dieser Vorgang des Auswechselns kann durch einfache Betätigung des Schwenkhebels 34 eingeleitet und beendet werden, ohne dass es notwendig wäre, irgendwelche die Scherenmessereinheit tragende Gehäuseteile zu demontieren.

### Bezugszeichenliste

- 10: Gehäuse
- 12: Handgriff
- 14: Scherenmessereinheit
- 16: Elektromotor
- 18: Getriebe
- 20: Antriebseinheit
- 22: Führungsstange
- 24: Führungshülse
- 26: Druckschraubenfeder
- 28: Boden
- 30: Führung
- 32: Gleitkörper
- 34: Hebel
- 36: Nocken
- 38: Platte
- 40: Gehäuseschlitz
- 42: festes Messerblatt
- 44: bewegliches Messerblatt
- 46: Passlöcher
- 48: Passstifte
- 50: Eingriffsteil
- 52: Achse vertikal
- 54: Längsführung

## Patentansprüche

1. Akku-Gartenschere
mit einem mit Handgriff (12) versehenen Gehäuse (10),
das auswechselbar eine aus einem festen Messerblatt (42) und einem gegenüber diesem oszillierenden Messerblatt (44) bestehende Scherenmessereinheit (14) lagert,
wobei der Antrieb des oszillierenden Messerblattes durch einen Elektromotor (16) über ein Getriebe (18) erfolgt,
und Fixierungsmittel (46, 48) das feste Messerblatt (42) betriebsmäßig im Gehäuse (10) festlegen,
**dadurch gekennzeichnet, dass**
der Elektromotor (16) und das Getriebe (18) eine Antriebseinheit (20) bilden,
die im Gehäuse (10) senkrecht zur Messerebene entgegen einer Federkraft (26) verschiebbar gelagert ist,
um die Antriebsverbindung und die Fixierungsbefestigung aufzuheben beziehungsweise eine Einkupplung der Antriebsvorrichtung zusammen mit einer Fixierungsfestlegung vorzunehmen,
dass das Gehäuse (10) eine Gleitführung für die Scherenmessereinheit (14) aufweist, die über einen Schlitz (40) aus dem Gehäuse im betriebsmäßigen Zustand vorsteht,
und dass die Verschiebung der Antriebseinheit (20) durch ein manuell zu betätigendes Stellglied (34) bewirkt wird, das die Antriebseinheit (20) in ihrer entkuppelten und angehobenen Stellung festlegt, in der die Auswechslung der Messereinheit (14) durch den Schlitz (40) hindurch erfolgen kann.

2. Akku-Gartenschere nach Anspruch 1, **dadurch gekennzeichnet, dass** das Stellglied einen am Gehäuse (10) gelagerten Handhebel (34) aufweist, der mit einem Bewegungsnocken (36) verbunden ist, welcher an der Antriebseinheit (20) angreift und bei seiner Verschwenkung die Antriebseinheit (20) unter Aufhebung der Fixierung gegen Federkraft (26) anhebt.

3. Akku-Gartenschere nach den Ansprüchen 1 und 2, **dadurch gekennzeichnet, dass** die Antriebseinheit (20) in einer Führung (22, 24) höhenverstellbar senkrecht zur Messerebene im Gehäuse (10) gelagert ist und diese Führung eine Druckschraubenfeder (26) aufweist, die die Antriebseinheit (20) in die Betriebsstellung zu überführen trachtet.

4. Akku-Gartenschere nach einem der Ansprüche 1 bis 3, bei welcher die Antriebseinheit (20) durch das Stellglied (34) gegen Federdruck (26) verschiebbar ist.

5. Akku-Gartenschere nach den Ansprüchen 1 bis 4, **dadurch gekennzeichnet, dass** das Stellglied aus einem am Gehäuse (10) gelagerten Handhebel (34) besteht, der mit einem Bewegungsnocken (36) verbunden ist, der an der Antriebseinheit (20) angreift und bei Verschwenkung des Hebels die Antriebseinheit (20) unter Aufhebung den Fixierung gegen die Federkraft (26) anhebt.

6. Akku-Gartenschere nach Anspruch 5, **dadurch gekennzeichnet, dass** der Handhebel (34) eine Abschlussklappe aufweist, die in Betriebsstellung im Boden (28) des Gehäuses (10) zu liegen kommt ist.

7. Akku-Gartenschere nach einem der vorhergehenden Ansprüche, **dadurch gekennzeichnet, dass** die Scherenmessereinheit (14) als Rasenscherenmesser, Konturenscherenmesser oder Strauchscherenmesser ausgebildet ist.

## Claims

1. Battery-powered gardening shears, comprising:
a housing (10) equipped with a handle (12),
which has a shear blade unit (14) consisting of a fixed knife blade (42) and an oppositely arranged oscillating knife blade (44) supported in it, which can be replaced,
wherein the oscillating knife blade is driven by an electric motor (16) via a gear (18),and
fixation means (46, 48) retaining the fixed knife blade (42) in the housing (10) during operation, **characterised in that**
the electric motor (16) and the gear (18) form a drive unit (20) which is slidably mounted in the housing (10) perpendicular to the knife plane against a spring force (26),
in order to cancel the drive connection and the fixation mounting and/or in order to effect engagement of the drive mechanism together with a fixation mounting,
**in that** the housing (10) comprises a slideway for the shear blade unit (14) which protrudes beyond a slot (40) from the housing, when in the operating state,and
**in that** sliding of the drive unit (20) is accomplished by a manually-operated actuator (34) which fixes the drive unit (20) in its disengaged and raised position in which replacement of the knife unit (14) can be carried out through the slot (40).

2. The battery-powered gardening shears according to claim 1, **characterised in that** the actuator comprises a hand lever (34) mounted on the housing (10), which is connected with a movable cam (36) which engages on the drive unit (20) and when swivelled raises the drive unit (20) by cancelling its fixation against spring force (26).

3. The battery-powered gardening shears according to claims 1 and 2, **characterised in that** the drive unit (20) is mounted in a guideway (22, 24) in the housing (10) so as to be height-adjustable perpendicular to the knife plane, and **in that** this guideway comprises a compression coil spring (26) which endeavours to push the drive unit (20) into the operating position.

4. The battery-powered gardening shears according to one of claims 1 to 3, wherein the drive unit (20) is slidable by the actuator (34) against spring pressure (26).

5. The battery-powered gardening shears according to claims 1 to 4, **characterised in that** the actuator consists of a hand lever (34) mounted on the housing (10), which is connected with a movable cam (36) which engages on the drive unit (20) and during swivelling of the lever raises the drive unit (20) by cancelling the fixation against the spring pressure (26).

6. The battery-powered gardening shears according to claim 5, **characterised in that** the hand lever (34) comprises an end cap which in operating position comes to rest within the floor (28) of the housing (10).

7. The battery-powered gardening shears according to one of the preceding claims, **characterised in that** the shear blade unit (14) may be configured as grass shears, contour shears or shrub shears.

## Revendications

1. Cisailles de jardin à batterie
avec un boitier (10) muni d'une poignée (12),
qui loge de manière interchangeable un ensemble de lames de cisaille (14) constitué d'une lame de coupe (42) fixe et d'une lame de coupe (44) oscillante par rapport à cette dernière,
l'entraînement de la lame de coupe oscillante s'effectuant via un moteur électrique (16), par l'intermédiaire d'une transmission (18),
et des moyens de fixation (46, 48) immobilisant de manière opérationnelle la lame de coupe (42) fixe dans le boitier (10),
**caractérisé en ce que**
le moteur électrique (16) et la transmission (18) formant une unité d'entraînement (20),
qui est logée dans le boitier (10) à la perpendiculaire du plan des lames en étant déplaçable à l'encontre de la force d'un ressort (26),
pour supprimer la liaison d'entraînement et l'assemblage de fixation ou pour procéder à un accouplement du dispositif d'entraînement avec une immobilisation de fixation,
**en ce que** le boitier (10) comporte un guidage coulissant pour l'ensemble de lames de cisaille (14) qui par l'intermédiaire d'une encoche (40) saillit hors du boitier en position fonctionnelle
et **en ce que** le déplacement de l'unité d'entraînement (20) est provoqué par un actionneur (34) à manoeuvrer manuellement qui immobilise l'unité d'entraînement (20) dans sa position désaccouplée et relevée, dans laquelle on peut procéder au changement de l'ensemble de lames (14) à travers l'encoche (40).

2. Cisailles de jardin à batterie selon la revendication 1, **caractérisé en ce que** l'actionneur comporte un levier (34) manuel logé sur le boitier (10) qui est relié avec une came de déplacement (36) qui s'engage sur l'unité d'entraînement (20) et qui lors de son pivotement relève l'unité d'entraînement (20) en supprimant la fixation contre la force du ressort (26).

3. Cisailles de jardin à batterie selon les revendications 1 et 2, **caractérisé en ce que** l'unité d'entraînement (20) est logée dans un guidage (22, 24) en étant réglable en hauteur à la perpendiculaire du plan des lames dans le boitier (10) et **en ce que** ledit guidage comporte un ressort (26) hélicoïdal de compression susceptible de transférer l'unité d'entraînement (20) dans la position de service.

4. Cisailles de jardin à batterie selon l'une quelconque des revendications 1 à 3, sur lequel l'unité d'entraînement (20) est déplaçable par l'actionneur (34) à l'encontre de la force du ressort (26).

5. Cisailles de jardin à batterie selon les revendications 1 à 4, **caractérisé en ce que** l'actionneur est constitué d'un levier manuel (34) logé sur le boitier (10) qui est relié à une came de déplacement (36) qui s'engage sur l'unité d'entraînement (20) et qui lors du pivotement du levier relève l'unité d'entraînement (20) en supprimant la fixation à l'encontre de la force du ressort (26).

6. Cisailles de jardin à batterie selon la revendication 5, **caractérisé en ce que** le levier manuel (34) comporte un capuchon qui en position de service vient se placer dans le fond (28) inférieur du boitier (10).

7. Cisailles de jardin selon l'une quelconque des revendications précédentes, **caractérisé en ce que** l'ensemble de lames de cisaille (14) est conçu en tant que lame gazon, lame contour ou lame de sculpte-haies.
